Europäisches Patentamt

European Patent Office

Office européen des brevets

(11) Veröffentlichungsnummer: **0 455 965 A2**

# (12) EUROPÄISCHE PATENTANMELDUNG

(21) Anmeldenummer: 91104296.8

(22) Anmeldetag: 20.03.91

(51) Int. Cl.5: **C08F 251/00**

(30) Priorität: 08.05.90 DE 4014628

(43) Veröffentlichungstag der Anmeldung:
**13.11.91 Patentblatt 91/46**

(84) Benannte Vertragsstaaten:
**BE CH DE ES FR GB IT LI NL SE**

(71) Anmelder: **STARCHEM GMBH**
**George-C.-Marshall-Strasse 210**
**W-4150 Krefeld 12(DE)**

(72) Erfinder: **Heidel, Klaus, Dr.**
**Veilchenweg 10**
**W-4370 Marl(DE)**
Erfinder: **Krause, Frank, Dr.**
**Pastoratsweg 15**
**W-4190 Kleve(DE)**
Erfinder: **Hofmann, Peter, Dr.**
**Lavendelweg 28**
**W-4370 Marl(DE)**

(54) **Verfahren zur Herstellung von feinteiligen, wasserquellbaren Polysaccharid-Pfropfpolymeren.**

(57) Durch halbkontinuierliche Umkehrphasen-Suspensionspolymerisation, bei der zu einer Suspension eines Polysaccharids in einem organischen Lösemittel eine wäßrige Lösung einer ungesättigten Carbonsäure und eines Initiators kontinuierlich zudosiert wird, und durch anschließende Teilentwässerung und Nachvernetzung werden feinteilige Polysaccharid-Pfropfpolymere mit einem hohen Absorptionsvermögen für Urin und Wasser hergestellt.

EP 0 455 965 A2

Die Erfindung betrifft ein neues Verfahren zur Herstellung von feinteiligen, porösen und schnell wasserquellbaren Polysaccharid-Pfropfpolymeren. Diese Polymere werden durch halbkontinuierliche Umkehrphasen-Suspensionspolymerisation, Teilentwässerung und Nachvernetzung hergestellt.

Wasserabsorbierende Polymere finden vielfältige Verwendung auf dem Sanitär- und Hygienesektor als Wasserabsorptionsmittel in Papierwindeln und -tüchern, als Tampons, Krankenunterlagen, Elektrolytverdikkern in Trockenbatterien, als Feuchthaltemittel oder Wasserspeicher in der Landwirtschaft und als Trocknungsmittel.

Geeignete Polymere sind derivatisierte, meist mit wasserlöslichen Vinylmonomeren gepfropfte Polysaccharide, wie Carboxymethylcellulose, hydrolysierte Stärke-Acrylnitril-Pfropfpolymere, Acrylsäure-Stärke-Pfropfpolymere, oder vollsynthetische, schwach vernetzte Polymere, wie teilvernetzte Polyacrylsäuresalze oder teilvernetzte Polymaleinsäurederivate.

In DE-C-26 12 846 wird ein Verfahren zur Herstellung von Harzen mit hohem Wasserabsorptionsvermögen beschrieben. Dabei wird Stärke auch mit Acrylsäure und einem Vernetzungsmittel in wäßriger oder wäßrigalkoholischer Lösung polymerisiert. Bei Feststoffgehalten von meist unter 20 % entstehen bei dieser Fällungspolymerisation jedoch gummiartige Blockgele, aus denen man erst nach Trocknung und Mahlung die pulverförmigen Endprodukte erhält.

Nach der japanischen Patentschrift 80/139 408 kann durch Polymerisation von Acrylnitril in wäßrigem Medium in Gegenwart von Stärke ein Pfropfpolymer hergestellt werden, das anschließend hydrolysiert und vernetzt werden kann. Man erhält ein Pulver mit einer Wasserabsorptionsfähigkeit von 150 bis 180 ml/g.

Eine Pfropfpolymerisation in Suspension wird in der japanischen Patentschrift 80/161 813 angegeben. Dabei wird zunächst eine Mischung aus n-Hexan mit Sorbitanmonostearat, Stärke, Wasser, Acrylsäure, Natronlauge und wasserlöslichem Initiator angesetzt, bevor man durch Erwärmen die Polymerisation einleitet. Das Reaktionsprodukt neigt hier jedoch während der Polymerisation zur Verklumpung und fällt nicht feinteilig an.

Nach DE-C-28 40 010 können kationische, wasserlösliche Polysaccharid-Pfropfpolymere durch inverse Suspensionspolymerisation hergestellt werden. Dabei wird zunächst ein Polysaccharid in Gegenwart eines grenzflächenaktiven Mittels in einem mit Wasser nicht mischbaren Lösemittel suspendiert. Anschließend wird eine wäßrige Monomerlösung, die überwiegend Acrylamid enthält und in geringen Mengen auch Acrylsäure aufweisen kann, bei Raumtemperatur zugegeben. Nach Zusatz eines Initiators wird erwärmt und polymerisiert. Die Feststoffgehalte, bezogen auf die wäßrige Polymerisationsmischung, liegen bei über 50 %.

Hier werden keine Vernetzungsmittel eingesetzt und keine wasserquellbaren gelartigen Polymere erhalten. Das angegebene ansatzweise Herstellverfahren führt zu Beginn der Polymerisation zu Temperaturspitzen, die bei großen Ansätzen schwer zu beherrschen sind.

In EP-B-0 083 022 wird Acrylsäure in Gegenwart von Stärke in wäßriger Lösung polymerisiert. Die Produkte können dann in einem inerten Lösemittel in Gegenwart von 0,01 bis 1,3 Teilen Nasser pro Teil Harz vernetzt werden.

Die Herstellung der Stärke-Pfropfpolymere erfolgt bei einem Feststoffgehalt von nur 20 %. Außerdem weisen diese Stärke-Pfropfpolymere - vernetzt oder unvernetzt - nur eine geringe Wasserabsorptionsfähigkeit auf.

Gemäß DE-A-38 01 633 werden Polysaccharid-Pfropfpolymere durch inverse Suspensionspolymerisation, Teilentwässerung und Vernetzung hergestellt. Die inverse Suspensionspolymerisation wird jedoch einstufig und diskontinuierlich durchgeführt, indem zunächst alle Reaktionskomponenten zusammengegeben werden und dann die Polymerisation durch Erhitzen in Gegenwart eines Initiators eingeleitet wird. Dabei wird zu Beginn der Polymerisation Wärme schlagartig frei. In technischen Produktionsreaktoren ist eine ausreichend schnelle Abfuhr der Polymerisationswärme oft nur schwer zu gewährleisten.

Es bestand daher die Aufgabe, ein Verfahren zur Herstellung von feinteiligen Polysaccharid-Pfropfpolymeren zu entwickeln, das Produkte mit einem sehr guten Wasserabsorptionsvermögen liefert und das dabei gut im Technikums- und Produktionsmaßstabe durchführbar ist. Im besonderen sollte die Polymerisationswärme sicher abführbar sein.

Die Aufgabe wird erfindungsgemäß dadurch gelöst, daß man die Umkehrphasen-Suspensionspolymerisation halbkontinuierlich in dem Sinne durchführt, daß dabei zu einer Suspension von 5 bis 40 Teilen Polysaccharid in einem unpolaren organischen Lösemittel mit einer Dispergiermittelmischung eine wäßrige Lösung, die 60 bis 95 Teile einer zu 50 bis 100 % neutralisierten, olefinisch ungesättigten Carbonsäure und 0,005 bis 5 Teile Polymerisationsinitiator enthält, in 0,5 bis 5 Stunden kontinuierlich zugibt und dabei bei 40 bis 100 °C polymerisiert. Die Suspension kann hier bis zu 2 Teile Polymerisationsinitiator enthalten. Die Dispergiermittelmischung besteht zu 50 bis 100 Gewichtsprozent aus einem nichtionischen Tensid mit einem HLB-Wert (Hydrophil-Lipophil-Gleichgewicht) von 0,5 bis 10 und zu 0 bis 50 Gewichtsprozent aus einem nichtionischen Tensid mit einem HLB-Wert von 10,5 bis 20. Die wäßrige Lösung kann zusätzlich bei zu 50 Teile weitere, olefinisch ungesättigte Monomere und bis zu 2 Teile Quervernetzungsmittel enthalten.

Es stellte sich nämlich überraschend heraus, daß für eine praktisch vollständige Umsetzung von Polysaccharid und ungesättigter Carbonsäure eine Vormischung der Reaktionskomponenten nicht erforderlich ist und daß man die ungesättigte Carbonsäure erst während der Pfropfpolymerisation kontinuierlich zudosieren kann.

Geeignete Polysaccharide sind Stärken, Stärkederivate sowie Cellulosederivate. Dabei können native Stärken aus Kartoffeln, Mais, Weizen, Reis oder Tapiocawurzeln, ferner Wachsmais oder High-Amylose-Stärke sowie deren Derivate, wie beispielsweise Stärkeether und -ester, eingesetzt werden. Besonders geeignet sind dünnkochende Stärken, die meist aus schwach hydrolytisch oder oxidativ abgebauten Stärken bestehen. Dabei werden Stärken mit einer Viskosität von 20 bis 25 000 mPa s, gemessen an einer 10%igen Paste bei 20 °C, bevorzugt, wobei Viskositäten von 40 bis 500 mPa s besonders bevorzugt werden.

Vorzugsweise werden 10 bis 25 Teile Stärke in dem organischen Lösemittel suspendiert.

Als Lösemittel für die organische Phase werden Kohlenwasserstoffe mit 6 bis 12 C-Atomen eingesetzt. Man kann aliphatische oder alicyclische Kohlenwasserstoffe, wie Cyclohexan, n-Hexan, $C_8$-Isoparaffine oder technische Benzinfraktionen, wie Normalbenzin, Ligroin, Testbenzin oder Solventnaphtha, mit einem Aromatenanteil bis zu 20 % und einem Siedepunkt im Bereich von 50 bis 200 °C verwenden.

Als nichtionisches Tensid mit einem HLB-Wert von 0,5 bis 10, das in dem organischen Lösemittel mindestens teilweise löslich sein soll, werden vorzugsweise lipophile Sorbitanester, wie z. B. Sorbitanmonolaurat, Sorbitanmonopalmitat oder Sorbitanmonooleat, eingesetzt. Außerdem sind auch Polyetherester, wie Polyethylenglykol(200)-monooleat, Polyethylenglykol(200)-monolaurat oder Polyethylenglykol(300)-oleat, gut geeignet.

Vorteilhaft ist die Mitverwendung eines überwiegend wasserlöslichen, nichtionischen Dispergiermittels mit einem HLB-Wert von 10,5 bis 20. Derartige Stoffe sind beispielsweise wasserlösliche Polethylenglykole mit einem Molekulargewicht von 200 bis 20 000, insbesondere von 400 bis 5 000, ferner Polyethylenglykolether aus einem aliphatischen einwertigen Alkohol mit 6 bis 20 C-Atomen und einem Polyethylenglykol mit 3 bis 30, insbesondere mit 4 bis 20 Ethylenoxideinheiten. Geeignet sind auch handelsübliche $C_{12}$-Fettalkoholpolyglykolether mit 7 bis 19 Ethylenoxideinheiten und einem HLB-Wert von 13 bis 18. Geeignet sind ferner Polyoxyethylen-Sorbitanfettsäureester, wie beispielsweise Polyoxyethylen-Sorbitanmonolaurat oder Polyoxyethylen-Sorbitanmonooleat.

In einer bevorzugten Ausführungsform besteht die Dispergiermittelmischung aus 50 bis 90 Gewichtsprozent nichtionischem Tensid mit einem HLB-Wert von 4 bis 10 und aus 10 bis 50 Gewichtsprozent nichtionischem Tensid mit einem HLB-Wert von 12 bis 18.

Der Anteil der Dispergiermittelmischung beträgt 1 bis 10 Gewichtsprozent, vorzugsweise 2 bis 5 Gewichtsprozent, bezogen auf das Gewicht der olefinisch ungesättigten Carbonsäure.

Die olefinisch ungesättigten Carbonsäuren weisen 3 bis 10 Kohlenstoffatome auf. Beispiele dafür sind Acrylsäure, Methacrylsäure, Crotonsäure, Tiglin- oder Angelicasäure. Vorzugsweise werden Acryl- und Methacrylsäure eingesetzt. Die Säuren können mit Alkali- oder Ammoniumhydroxidlösungen neutralisiert oder teilneutralisiert sein. Dabei wird vorzugsweise Natronlauge eingesetzt. Die wäßrigen Lösungen der ungesättigten Carbonsäuren weisen meist einen Feststoffgehalt im Bereich von 20 bis 45 % auf. Vorzugsweise werden 75 bis 90 Teile ungesättigte Carbonsäure eingesetzt.

Neben den ungesättigten Carbonsäuren können weitere, olefinisch ungesättigte Monomere, wie Acrylamid, Methacrylamid, Na-Salz von 2-Acrylamido-2-methylpropansulfonsäure, 2-Methacryloylethansulfonsäure, 2-Hydroxyethylacrylat, 2-Hydroxyethylmethacrylat, N.N-Dimethylaminoethylacryloder -methacrylat oder dessen quaternäre Ammoniumsalze in Form ihrer wäßrigen Lösung für die Polymerisation verwendet werden.

Die wäßrige Lösung, die zur Polymerisation der vorgelegten Polysaccharid-Suspension zugegeben wird, kann auch vollständig oder überwiegend wasserlösliche Quervernetzungsmittel enthalten. Geeignet sind Vinylverbindungen, wie N.N-Methylen-bis-acrylamid, Butandiol-1.4-di(meth)acrylat, Ethandioldi(meth)acrylat, Diallylmaleinat, Glycidyl(meth)acrylat, Allylmethacrylat, Polyethylenglykol(450)dimethacrylat,oder Polyepoxide, wie beispielsweise Ethylenglykoldiglycidylether, Polyethylenglykoldiglycidylether, Glycerintriglycidylether oder Diglycerintetraglycidylether.

Vorzugsweise wird jedoch nur eine Nachvernetzung vorgenommen und der wäßrigen Lösung für die Polymerisation kein Quervernetzungsmittel zugegeben.

Für die Pfropfpolymerisation werden übliche Polymerisationsinitiatoren verwendet. Geeignet sind beispielsweise Ammonium-, Natrium- oder Kaliumperoxodisulfat und entsprechende Peroxomonosulfate, Dibenzoylperoxid, Dilauroylperoxid, Di-2-ethylhexylperoxodicarbonat, Dicyclohexylperoxodicarbonat, tert.-Butylperpivalat, tert.-Butylperbenzoat, tert.-Butylpermaleinat, tert.-Butylhydroperoxid, Ditert.-butylperoxid, Wasserstoffperoxid sowie Redox-Katalysatoren, wobei als reduzierende Komponente Ascorbinsäure, Natriummethylsulfinat, Dinatriumsulfit und Natriumhydrogensulfit in Betracht kommen. Außerdem eignen sich Azostarter, wie Azo-bis-isobutyronitril, 2.2-Azo-bis-(2-amidinopropan)-dihydrochlorid, 2.2'-Azo-bis-(4-cyanopentancarbonsäure) und 2-Carbamoylazoisobutyronitril.

Die Initiatoren können in der Lösung der ungesättigten Carbonsäure zu der Polysaccharid-Suspension zugegeben werden. Sie können aber auch als getrennte wäßrige Lösung zudosiert werden. Man kann auch einen Teil des Initiators in der organischen Phase vorlegen und einen anderen Teil mit der wäßrigen Lösung der ungesättigten Carbonsäure zuführen. Vorzugsweise werden 0,03 bis 0,5 Teile Initiator in der organischen Phase vorgelegt und 0,05 bis 1,5 Teile Initiator in einer wäßrigen Lösung zudosiert.

Kalium- und Ammoniumperoxodisulfat werden vorzugsweise eingesetzt.

Polysaccharid-Suspension und wäßrige Lösung können außerdem übliche Hilfs- und Zusatzstoffe, wie Entschäumer und Komplexierungsmittel, enthalten. So kann man zur Komplexierung von Eisenspuren beispielsweise Nitrilotriacetat, Ethylendiamintetraacetat oder Diethylentriaminpentaacetat zu setzen.

Die Polymerisation wird vorzugsweise bei 50 bis 75 °C durchgeführt.

Bei der Umkehrphasen-Suspensionspolymerisation wird eine wäßrige Polymermischung erhalten, die vorzugsweise einen Feststoffgehalt von 30 bis 50 %, bezogen auf die Summer aus Polymer und Wasser, aufweist.

Nach beendeter Polymerisation führt man eine Teilentwässerung durch, wobei man vorzugsweise einen Restwassergehalt von 5 bis 30 %, bezogen auf die Summe von Polymer und Wasser, einstellt. Die Teilentwässerung wird im allgemeinen bei 50 bis 100 °C durch azeotrope Destillation, bei der man auch Vakuum anlegen kann, durchgeführt. Dabei können übliche Entwässerungsapparaturen verwendet werden, bei denen die organische Phase zurückgeführt wird.

Nach der Teilentwässerung werden vorzugsweise 0,005 bis 5 Gewichtsprozent Quervernetzungsmittel, bezogen auf das Pfropfpolymer, zugesetzt. Vorzugsweise liegt der Gehalt bei 0,05 bis 0,5 Gewichtsprozent, wobei man Epoxide bevorzugt. Dabei sind unter anderem Polyglycidylether, wie beispielsweise Ethylenglykoldiglycidylether, Polyethylenglykoldiglycidylether, Glycerintriglycidylether und Diglycerintetraglycidylether, geeignet. Außerdem sind auch Polyaldehyde, wie Glyoxal, oder Haloepoxyverbindungen, wie Epichlorhydrin, verwendbar. Diese Quervernetzungsmittel werden zweckmäßigerweise in wäßriger oder organischer Lösung zugegeben. Die Nachvernetzung erfolgt durch Erhitzen auf 50 bis 100 °C, wobei vorzugsweise auf 60 bis 80 °C erwärmt wird. Die Vernetzungsreaktion wird nach 0,5 bis 4 Stunden beendet.

Nach der Vernetzung fallen die Stärke-Pfropfpolymere in Form pulverförmiger, poröser, aus feinstteiligen Primärteilchen zusammengesetzten Körnern mit guter Rieselfähigkeit an. Die Körner können leicht von der kontinuierlichen, organischen Phase, beispielsweise durch Filtrieren oder Zentrifugieren, getrennt werden. Anschließend können sie nach üblichen Verfahren, beispielsweise unter Vakuum oder unter Anwendung eines Wirbelschicht-, Taumel- oder Schaufel-Trockners, zu pulverförmigem Produkt getrocknet werden. Das Filtrat kann in der nächsten Polymerisationscharge wiederverwendet werden. Lösemittel und Wasser lassen sich auch destillativ vom Polymerpulver abtrennen.

Die Polymerisation führt zu einem einheitlich feinen Produkt mit einer engen Korngrößenverteilung und einer hohen Saugkraft für Wasser- und Körperflüssigkeiten.

Als feinteilig werden im Sinne dieser Erfindung Produkte mit Korngrößen unter 2 mm verstanden, wobei über 85 Gewichtsprozent der Produkte Korngrößen unter 1 000 μm aufweisen sollen.

Die Bildung von grobteiligen Agglomeraten und Anbackungen ist sehr gering.

Die Produkte eignen sich in besonderem Maße zur Einarbeitung in zellstoffhaltige, saugfähige Hygieneartikel, wie Wegwerfwindeln, Damenbinden, Wischtüchern und Krankenunterlagen. Sie können als Trockenmittel, als Quellmittel in Dichtungsmassen, als Eindickmittel sowie als Wasserspeicher oder Feuchthaltemittel in der Landwirtschaft verwendet werden.

Da die zudosierten ungesättigten Monomere sofort polymerisiert werden, kann die Wärmeentwicklung bei der Polymerisation sehr gut kontrolliert und beherrscht werden. Bei kontinuierlicher Zugabe wird stetig Wärme entwickelt, die gut abgeführt werden kann. Temperaturspitzen treten nicht auf. Das erfindungsgemäße halbkontinuierliche Umkehrphasen-Suspensionspolymerisationsverfahren läßt sich deshalb ohne große Schwierigkeiten auch im Produktionsmaßstabe durchführen.

Das Verfahren wird allgemein so durchgeführt, daß man in einem Rührkessel das Polysaccharid in dem organischen Lösemittel unter Rühren dispergiert und auf die gewünschte Polymerisationstemperatur erwärmt. Anschließend wird eine wäßrige Lösung mit der ungesättigten Carbonsäure und dem Polymerisationsinitiator zudosiert, wobei eine Polymerisation mit Pfropfung stattfindet. Nach der Polymerisation wird durch azeotrope Destillation am Wasserabscheider teilentwässert. Man führt dann eine Nachvernetzung durch und kann danach das Polymer als feinteiliges Produkt abtrennen.

Für die Beispiele, die die Erfindung verdeutlichen sollen, werden folgende Bestimmungen durchgeführt:

Flüssigkeitsrückhaltevermögen

In einem 100-ml-Zentrifugenglas werden 0,050 g Polymer mit 70 ml destilliertem Wasser oder 0,500 g Polymer mit 70 ml synthetischem Urin (Mischung aus 3 883 g destilliertem Wasser, 33,2 g NaCl, 4,0 g $MgSO_4 \cdot 7H_2O$, 2,4 g $CaCl_2$ und 77,6 g Harnstoff) versetzt und eine Stunde unter schwachem Rühren gequollen. Danach wird die Gelphase 0,5 Stunden bei 4 500 UpM von der Solphase abzentrifugiert und gewogen.

$$Absorptionsvermögen = \frac{Gelauswaage - Einwaage}{Einwaage} \quad (g/g)$$

Saugkraft

0,050 g Polymer (bei Verwendung von destilliertem Wasser) oder 0,100 g Polymer (bei Verwendung von synthetischem Urin) werden auf eine Glasfritte (Typ G3, Durchmesser 3 cm) gestreut, die mit einer flüssigkeitsgefüllten Bürette verbunden und auf das Niveau der Glasfritte nivelliert ist. Die absorbierte Flüssigkeitsmenge wird nach 0,5 und 5 Minuten an der Bürette gemessen.

$$Saugkraft = \frac{absorbierte \ Flüssigkeitsmenge}{Einwaage} \quad (g/g)$$

Die in den Beispielen angegebenen Ausbeuten in g beziehen sich stets auf Produkte, die 24 Stunden bei 50 °C im Vakuumtrockenschrank (15 mbar Vakuum) bis zu einem Restfeuchtegehalt von 7 Gewichtsprozent getrocknet wurden. Die angegebenen Viskositäten beziehen sich auf 10%ige wäßrige Pasten bei 20 °C.

Beispiel 1

In einem 4-l-Glasreaktor, ausgerüstet mit Rührer, Stickstoffeinleitung, Dosiervorrichtung und Wasserabscheider, werden 2 400 ml Cyclohexan vorgelegt und auf 68 °C erhitzt. Unter Rühren (500 UpM) werden

| | |
|---|---|
| 75 g | native Maisstärke, |
| 4 g | Sorbitanmonolaurat (SPAN[R] 20 der Fa. Atlas, Wilmington,Del., USA), |
| 0,25 g | Kaliumperoxodisulfat in 30 ml Wasser und |
| 50 mg | Ethylendiamintetraacetat (Na-Salz) |

dispergiert. Mit Stickstoff wird dann Sauerstoff verdrängt, worauf eine Monomer lösung aus

| | |
|---|---|
| 312 g | Acrylsäure, |
| 480 g | 25%iger NaOH, |
| 10 g | Sorbitanmonolaurat, |
| 0,1 g | Trimethylolpropantriacrylat und |
| 0,5 g | Ammoniumperoxodisulfat in 20 ml Wasser |

in 45 Minuten zudosiert wird. Es wird eine halbe Stunde nachgerührt. Dann werden 280ml Wasser azeotrop bei 75 °C abdestilliert, worauf bei 70 °C 0,3 g Ethylenglykoldiglyxidylether in 5 ml Wasser zugesetzt werden. Man rührt noch 2 Stunden nach, worauf ein pulverförmiges Produkt abfiltriert wird.

Ausbeute: 417 g Produkt

Die durch Siebanalyse bestimmte Kornverteilung sowie die Absorptionseigenschaffen gehen aus Tabelle 1 hervor. Polarographische Aufnahmen zeigen, daß der Stärkeanteil von 16 % homogen im Endprodukt eingebaut ist.

Beispiel 2

In der Apparatur von Beispiel 1 werden in 1 800 ml Cyclohexan unter Rühren bei 68 °C

| | |
|---|---|
| 44 g | dünnkochende Stärke mit einer Viskosität von 127 mPa s (AMISOL$^R$ 05515 der Fa. Cerestar, D-4150 Krefeld), |
| 12 g | Sorbitanmonolaurat, |
| 4 g | Polyethylenglykol mit einer Molmasse von 1 550 (POLYDIOL 1550 der Fa. Hüls AG, D-4370 Marl 1), |
| 50 mg | Ethylendiamintetraacetat und |
| 0,3 g | Ammoniumperoxodisulfat in 12 ml Wasser |

dispergiert. Anschließend wird unter Rühren eine wäßrige Lösung aus

| | |
|---|---|
| 258 g | Acrylsäure, |
| 400 g | 25%iger NaOH und |
| 0,5 g | Ammoniumperoxodisulfat in 20 ml Wasser |

in 35 Minuten kontinuierlich zudosiert.

Danach werden 2 g pyrogene Kieselsäure (AEROSIL$^R$ 2000 C der Fa. Degussa AG, D-6000 Frankfurt) zugesetzt und dann 233 ml Wasser azeotrop abdestilliert.

Zur Nachvernetzung werden 0,12 g Ethylenglykoldiglycidylether, gelöst in 5 ml Wasser-Methylethylketon-Gemisch (1 : 1), bei 70 °C zugesetzt, worauf 2 Stunden nachgerührt wird.

Ausbeute: 364 g Produkt

Im Pulver wird ein Restmonomergehalt von 31 ppm an nicht umgesetztem Acrylat bestimmt. Die Anbackungen an Rührer und Kesselwand betragen 21 g.

Beispiel 3

In der Apparatur von Beispiel 1 werden in 2 200 ml Cyclohexan unter Rühren (400 UpM)

| | |
|---|---|
| 100 g | dünnkochende Stärke von Beispiel 2, |
| 14 g | Sorbitanmonolaurat, |
| 4 g | Polyethylenglykol mit einer Molmasse von 1 550, |
| 50 mg | Ethylendiamintetraacetat, |
| 0,5 g | Kaliumperoxodisulfat in 20 ml Wasser und |
| 200 g | Wasser |

dispergiert und auf Rückflußtemperatur (68 °C) aufgeheizt. Nach Spülen mit Stickstoff wird eine wäßrige Lösung, bereitet aus

| | |
|---|---|
| 312 g | Acrylsäure, |
| 480 g | 25%iger NaOH und 0,5 g Ammoniumperoxodisulfat in 20 ml Wasser, |

in 30 Minuten zudosiert.

Anschließend werden 300 ml Wasser azeotrop abdestilliert. Nach Zugabe eines Gemisches aus 0,2 g Sorbitantriglycidylether (DENACOL$^R$ 614 B der Fa. Nagase Chemicals Ltd., Osaka, Japan) und 0,1 g Ethylenglykoldiglycidylether in 5 ml Wasser wird 2 Stunden bei 70 °C nachgerührt.

Ausbeute: 505 g feinteiliges Polymerpulver

| | |
|---|---|
| Anbackungen an Kesselwand und Rührer: | 23 g |
| Restacrylatgehalt: | 18 ppm |

Beispiel 4

In der Apparatur von Beispiel 1 werden in 1 800 ml Cyclohexan bei Raumtemperatur

| | |
|---|---|
| 100 g | dünnkochende Stärke von Beispiel 2, |
| 12 g | Sorbitanmonolaurat, |
| 4 g | Polyethylenglykol mit der Molmasse 1550, |
| 50 mg | Ethylendiamintetraacetat und |
| 0,4 g | Ammoniumperoxodisulfat in 5 ml Wasser |

dispergiert. Nach Spülen mit Stickstoff wird auf 68 °C aufgeheizt und dann eine wäßrige Lösung aus

| | |
|---|---|
| 118 g | Acrylsäure, |
| 290 g | 25%iger NaOH und |
| 0,4 g | Ammoniumperoxodisulfat in 16 ml Wasser |

in 35 Minuten zugetropft.

170 ml Wasser werden azeotrop abdestilliert. Nach Zusatz von 0,1 g Ethylenglykoldiglycidylether in 5 ml Wasser wird 2 Stunden bei 70 °C nachgerührt.

Ausbeute: 260 g feinteiliges Polymerpulver

Anbackungen an Kesselwand und Rührer:     19 g
Restacrylatgehalt:                        38 ppm

Wird Beispiel 4 als einstufige, diskontinuierliche inverse Suspensionspolymerisation durchgeführt, bei der man alle Reaktionskomponenten bei Raumtemperatur mischt und aufheizt, setzt die Polymerisation bei 65 °C ein. Die Temperatur steigt schnell auf 80 °C an. Momentane Kühlung ist erforderlich, um die Polymerisation zu beherrschen. Es wird ein klumpiges Produkt erhalten, das auch nach Mahlung nur ein geringes Wasserabsorptionsvermögen aufweist.

Die Eigenschaften der Produkte der Beispiele 1 bis 4 sind in Tabelle 1 zusammengestellt.

Tabelle 1

| Bsp. | Stärke-anteil Gew.-% | Siebanalyse Anteile in Gew.-% | | | Absorptionsvermögen (g/g) | | Saugkraft (g/g) | | | |
|---|---|---|---|---|---|---|---|---|---|---|
| | | > 800 μ | 500 - 800 μ | < 500 μ | Wasser | synth. Urin | Wasser 0,5 min | Wasser 5 min | synth. Urin 0,5 min | synth. Urin 5 min |
| 1 | 16 | 12 | 60 | 28 | 320 | 36 | 42 | 110 | 19 | 22 |
| 2 | 12 | 3,5 | 44,5 | 52 | 348 | 36 | 52 | 108 | 17 | 23 |
| 3 | 20 | 4,6 | 85 | 10,4 | 338 | 34 | 52 | 114 | 17 | 23 |
| 4 | 39 | 0,5 | 18 | 81,5 | 280 | 32 | 40 | 104 | 15 | 20 |

Beispiele 5 bis 10

Es wird wie in Beispiel 3 verfahren. Es werden jedoch andere Polysaccharide eingesetzt. Das Absorptionsvermögen der resultierenden Produkte für synthetisches Urin geht aus Tabelle 2 hervor.

Tabelle 2

| Beispiel | 5 | 6 | 7 | 8 | 9 | 10 |
|---|---|---|---|---|---|---|
| Polysaccharid | Dextrin $M_w$ = 52 000 | oxidativ abgebaute Maisstärke | | säureabgebaute Maisstärke | | |
| Viskosität (mPa s) | - | 45 | 370 | 1 500 | 4 400 | 19 000 |
| Carboxyl (%) | - | 0,41 | 0,22 | - | - | - |
| Absorptionsverm. synth. Urin (g/g) | 55 | 44 | 36 | 38 | 34 | 30 |

**Patentansprüche**

1. Verfahren zur Herstellung feinteiliger, poröser und schnell wasserquellbarer Polysaccharid-Pfropfpolymerer durch halbkontinuierliche Umkehrphasen-Suspensionspolymerisation, Teilentwässerung und Nachvernetzung,
dadurch gekennzeichnet,
daß man bei der Suspensionspolymerisation
   - zu einer Suspension von 5 bis 40 Teilen Polysaccharid und 0 bis 2 Teilen Polymerisationsinitiator in einem unpolaren organischen Lösemittel, das eine Dispergiermittelmischung aus
   (a) 50 bis 100 Gewichtsprozent nichtionischem Tensid mit einem Hydrophil-Lipophil-Gleichgewicht von 0,5 bis 10 und
   (b) 0 bis 50 Gewichtsprozent nichtionischem Tensid mit einem Hydrophil-Lipophil-Gleichgewicht von 10,5 bis 20 enthält,
   - eine wäßrige Lösung, die
   60 bis 95 Teile einer zu 50 bis 100 % neutralisierten, olefinisch ungesättigten Carbonsäure,
   0 bis 50 Teile weitere, olefinisch ungesättigte Monomere,
   0 bis 2 Teile Quervernetzungsmittel und
   0,005 bis 5 Teile Polymerisationsinitiator enthält,
   bei 40 bis 100 °C in 0,5 bis 5 Stunden kontinuierlich zugibt.

2. Verfahren nach Anspruch 1,
dadurch gekennzeichnet,
daß als Polysaccharid eine Stärke suspendiert wird.

3. Verfahren nach Anspruch 2,
dadurch gekennzeichnet,
daß 10 bis 25 Teile Stärke suspendiert werden.

4. Verfahren nach Anspruch 1,
   dadurch gekennzeichnet,
   daß das organische Lösemittel ein aliphatischer oder cycloaliphatischer Kohlenwasserstoff ist.

5. Verfahren nach Anspruch 1,
   dadurch gekennzeichnet,
   daß die Dispergiermittelmischung aus
      (a) 50 bis 90 Gewichtsprozent nichtionischem Tensid mit einem Hydrophil-Lipophil-Gleichgewicht von 4 bis 10 und
      (b) 10 bis 50 Gewichtsprozent nichtionischem Tensid mit einem Hydrophil-Lipophil-Gleichgewicht von 12 bis 18
   besteht.

6. Verfahren nach Anspruch 1,
   dadurch gekennzeichnet,
   daß, bezogen auf die ungesättigte Carbonsäure, 1 bis 10 Gewichtsprozent, vorzugsweise 2 bis 5 Gewichtsprozent, Dispergiermittelmischung eingesetzt werden.

7. Verfahren nach Anspruch 1,
   dadurch gekennzeichnet,
   daß die olefinisch ungesättigte Carbonsäure Acrylsäure oder Methacrylsäure ist.

8. Verfahren nach Anspruch 1,
   dadurch gekennzeichnet,
   daß die wäßrige Lösung kein Quervernetzungsmittel enthält.

9. Verfahren nach Anspruch 1,
   dadurch gekennzeichnet,
   daß die kontinuierliche Zugabe bei 50 bis 75 °C erfolgt.

10. Verfahren nach Anspruch 1,
    dadurch gekennzeichnet,
    daß man bei der Suspensionspolymerisation eine wäßrige Polymermischung mit einem Feststoffgehalt von 30 bis 50 %, bezogen auf die Summe aus Polymer und Wasser, erhält.

11. Verfahren nach Anspruch 1,
    dadurch gekennzeichnet,
    daß die Teilentwässerung bis zu einem Restwassergehalt von 5 bis 30 %, bezogen auf die Summe aus Polymer und Wasser, erfolgt.

12. Verfahren nach Anspruch 1,
    dadurch gekennzeichnet,
    daß man die Nachvernetzung mit 0,005 bis 5 Gewichtsprozent Quervernetzungsmittel, bezogen auf das Polymer, durchführt.